# EUROPÄISCHE PATENTSCHRIFT

(11) **EP 1 380 466 B1**
(45) Veröffentlichungstag und Bekanntmachung des Hinweises auf die Patenterteilung: **31.05.2006**
(21) Anmeldenummer: 03014223.6
(22) Anmeldetag: 25.06.2003
(51) Int. Cl.: B60N 3/10

(54) **Halter für einen Getränkebehälter**
Holder for beverage containers
Support pour récipients pour boissons

(30) Priorität: 12.07.2002 DE 10231519
(43) Veröffentlichungstag der Anmeldung: 14.01.2004
(73) Patentinhaber: fischer automotive systems GmbH, 72160 Horb a.N. (DE)
(72) Erfinder: Schaal, Falk, 72275 Alpirsbach (DE)

(56) Entgegenhaltungen:
- DE-A- 4 200 823
- DE-A- 10 062 161
- DE-A- 10 101 642
- DE-A- 19 630 528
- DE-A- 19 752 385
- DE-A- 19 930 524
- US-A- 5 634 621
- US-A- 5 697 593
- PATENT ABSTRACTS OF JAPAN Bd. 1999, Nr. 13, 30. November 1999 (1999-11-30) & JP 11 206544 A (MATSUSHITA TATSUSHI), 3. August 1999 (1999-08-03)
- PATENT ABSTRACTS OF JAPAN Bd. 2000, Nr. 13, 5. Februar 2001 (2001-02-05) & JP 2000 272401 A (TOYODA GOSEI CO LTD), 3. Oktober 2000 (2000-10-03)

## Beschreibung

Die Erfindung betrifft einen Halter für einen Getränkebehälter mit den Merkmalen des Oberbegriffs des Anspruchs 1. Der Halter ist für den Einbau in ein Fahrzeug zum Halten von Getränkedosen, Flaschen oder dgl. vorgesehen.

Aus dem Stand der Technik sind eine Vielzahl derartiger Halter mit einer topfförmigen Behälteraufnahme bekannt. So werden beispielsweise entsprechende Vertiefungen im Bereich der Mittelkonsole von Kraftfahrzeugen angeordnet. Dabei besteht häufig das Problem, dass aufgrund mangelnden Platzes keine ausreichende Einstelltiefe für hohe Getränkebehälter, wie Flaschen, erreicht werden kann.

Aus der Druckschrift DE 197 52 385 A1 ist ein platzsparender Halter bekannt, bei dem ein Haltering durch eine an einer Behälteraufnahme angeordneten Führung zwischen einer abgesenkten und einer angehobenen Stellung auf- und abbeweglich geführt ist. Am Haltering ist ein Zapfen und an der Behalteaufnahme eine wendelartig umlaufende Nut angeordnet, so dass der Haltering durch Drehung in die abgesenkte bzw. angehobene Stellung verbracht werden kann. Auch in der abgesenkten Position des Halterings besteht eine nach oben offene Vertiefung, was im Bereich der Mittelkonsole aus optischen Gründen unerwünscht sein kann.

Der Erfindung liegt daher die Aufgabe zugrunde, einen Halter für einen Getränkebehälter zu schaffen, der bei geringem Bauraum eine große Einstelltiefe erreicht und sich bei Nichtbenutzung optisch ansprechend in den umgebenden Bauraum einfügt.

Diese Aufgabe wird erfindungsgemäß durch die Merkmale des Anspruchs 1 gelöst. Die Erfindung sieht vor, dass die Einstelltiefe der Behälteraufnahme durch einen Haltering vergrößert wird. Der Haltering wird durch eine an der Behälteraufnahme angeordnete Führung zwischen einer abgesenkten und einer angehobenen Stellung geführt. Die Behälteraufnahme benötigt dabei nur eine geringe Tiefe, beispielsweise nur ein Drittel der Höhe einer Getränkedose. Hierdurch ist ein Einbau beispielsweise im Bereich der Mittelkonsole auch bei beengten Platzverhältnissen im Inneren der Mittelkonsole möglich. Gleichzeitig ragt der Haltering in der abgesenkten Position nur kaum oder gar nicht über die den Halter umgebende Blende hinaus und stellt damit kein Hindemis dar. Sehr niedrigen Getränkebehältern, beispielsweise kleinen Pappbechem, gibt der Halter dennoch bereits in dieser abgesenkten Position des Halterings ausreichend Halt. Zum Halten höherer Getränkebehälter wird der Haltering angehoben und gibt in dieser Stellung guten Halt. Neben dem geringen Bauraum ergibt sich damit der Vorteil, dass die Einstelltiefe an unterschiedliche Getränkebehältergrößen anpassbar ist.

Erfindungsgemäß erfolgt sowohl das anheben als auch das Absenken des Halterings indirekt über einen schwenkend öffenbaren Deckel des Halters. Dazu sind Deckel und Haltering über eine Kulissensteuerung miteinander gekoppelt, wobei am Deckel ein Steuerzapfen angeordnet ist, der in eine Steuerkurve am Haltering eingreift. Durch das Öffnen des Deckels wird der Haltering, geführt durch die Führung an der Behälteraufnahme, nach oben gezogen. Entsprechend umgekehrt wird der Haltering beim Schließen des Deckels abgesenkt.

Dadurch dass der Deckel einen Halter aufweist, ist die Vertiefung der Behälteraufnahme bei der abgesenkten Stellung des Halterings, d. h. in der Nichtgebrauchsstellung, nicht sichtbar. Der Deckel kann derart geformt sein, dass er der umgebenden Kontur angepasst ist. Durch die Koppelung von Deckel und Haltering muss nicht zuerst der Deckel geöffnet und dann der Haltering angehoben werden, sondern der Haltering wird automatisch in die Gebrauchsstellung gebracht. Dies vereinfacht die Handhabung.

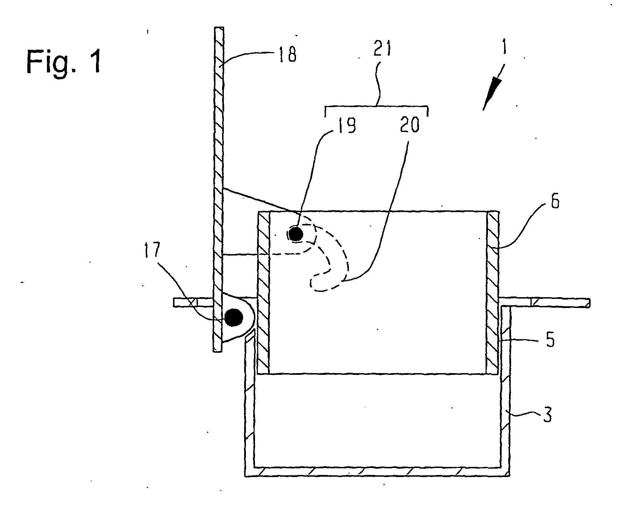

Die Erfindung wird nachfolgend anhand eines in der Zeichnung dargestellten Ausführungsbeispiels näher erläutert. Die einzige Figur 1 zeigt einen erfindungsgemäßen Halter in Schnittdarstellung.

Der in Figur 1 dargestellte Halter 1 ist für den Einbau in einen Kraftwagen beispielsweise im Bereich der Mittelkonsole vorgesehen. Der Halter 1 dient dem Einstellen eines Getränkebehälters wie beispielsweise einer dargestellten Getränkedose. Zu dessen Aufnahme weist der Halter 1 eine Behälteraufnahme 3 auf. Der Haltering 6 ist in der angehobenen Stellung dargestellt. An der Behälteraufnahme 3 ist über das Schwenklager 17 der Deckel 18 zum Verschließen des Halters 1 angebracht. Am Deckel 18 ist ein Steuerzapfen 19 angebracht, der in eine am Haltering 6 angeordnete Steuerkurve 20 eingreift. Hierdurch sind Deckel 18 und Haltering 6 in Form einer Kulissensteuerung 21 zwangsgekoppelt. Durch das Öffnen bzw. Schließen des Deckels 18 wird der Haltering 6 angehoben bzw. abgesenkt. Das Verbleiben des Halterings 6 in der dargestellten angehobenen Stellung kann durch entsprechende Reibungsverhältnisse in der Kulissensteuerung 21 im Schwenklager 17 und/oder in der Führung 5 des Halterings 6 in der Behälteraufnahme 3 erreicht werden. Alternativ kann ein Rastmechanismus (nicht dargestellt) vorgesehen werden.

## Patentansprüche

1. Halter (1), mit einer topfförmigen Behälteraufnahme (3) für einen Getränkebehälter, wobei der Halter (1) einen Haltering (6) und eine an der Behälteraufnahme (3) angeordnete Führung (5) aufweist, und wobei die Führung (5) den Haltering (6) zwischen einer abgesenkten und einer angehobenen Stellung auf- und abbeweglich führt, **dadurch gekennzeichnet, dass** der Halter (1) einen schwenkend offenbaren Deckel (18) aufweist und wobei der Haltering (6) über eine Kulissensteuerung (21) mit einem am Deckel (18) angeordneten Steuerzapfen (19) und einer am Haltering (6) angeordneten Steuerkurve (20) gekoppelt ist.

## Claims

1. Holder (1) having a pot-shaped container receptacle (3) for a drinks container, the holder (1) having a holding ring (6) and, arranged on the container receptacle (3), a guideway (5), the guideway (5) guiding the holding ring (6) for movement up and down between a lowered and a raised position, **characterised in that** the holder (1) has a cover (18), which is arranged to be pivoted open, the holding ring (6) being connected by way of a control track arrangement (21) comprising a control projection (19) arranged on the cover (18) and a curved control track (20) arranged on the holding ring (6).

## Revendications

1. Support (1) comprenant un réceptacle en forme de pot (3) pour un contenant de boisson, le support (1) présentant un anneau de maintien (6) et un guide (5) situé sur le réceptacle (3), et le guide (5) guidant l'anneau de maintien (6) vers le haut et vers le bas entre une position abaissée et une position levée ou relevée, **caractérisé en ce que** le support (1) présente un couvercle (18) pouvant s'ouvrir en pivotant et l'anneau de maintien (6) étant accouplé par le biais d'une commande à coulisse (21) comprenant un axe ou tourillon de commande (19) situé sur le couvercle (18) et une courbe ou came de commande (20) située sur l'anneau de maintien (6).
